# EUROPÄISCHE PATENTSCHRIFT

(11) **EP 1 799 494 B1**
(45) Veröffentlichungstag und Bekanntmachung des Hinweises auf die Patenterteilung: **12.08.2009**
(21) Anmeldenummer: 05792255.1
(22) Anmeldetag: 30.09.2005
(51) Int. Cl.: B60N 2/12, B60N 2/20

(54) **VORRICHTUNG ZUR BEGRENZUNG DER EINSTELLBARKEIT EINER KOMPONENTE, INSBESONDERE EINES FAHRZEUGSITZES, AUF EINEM SICH LÄNGS ERSTRECKENDEN EINSTELLBEREICH UND FAHRZEUGSITZ**
DEVICE FOR LIMITING THE ADJUSTABILITY OF A COMPONENT IN PARTICULAR A VEHICLE SEAT TO A LONGITUDINALLY-RUNNING ADJUSTMENT RANGE AND VEHICLE SEAT
DISPOSITIF POUR LIMITER LA POSSIBILITE DE REGLAGE D'UN ELEMENT, EN PARTICULIER D'UN SIEGE DE VEHICULE, A UNE ZONE DE REGLAGE S'ETENDANT LONGITUDINALEMENT ET SIEGE DE VEHICULE

(30) Priorität: 08.10.2004 DE 102004049404
(43) Veröffentlichungstag der Anmeldung: 27.06.2007
(73) Patentinhaber: Johnson Controls GmbH, 51399 Burscheid (DE)
(72) Erfinder: SCHMALE, Uwe, 42499 Hückeswagen (DE)
(74) Vertreter: Schwöbel, Karl T.
(86) Internationale Anmeldenummer: PCT/EP2005/054959
(87) Internationale Veröffentlichungsnummer: WO 2006/040271

(56) Entgegenhaltungen:
- EP-A- 0 878 344
- FR-A- 2 797 234
- US-A1- 2002 195 857
- US-B1- 6 619 741

## Beschreibung

Die Erfindung betrifft eine Vorrichtung zur Begrenzung der Einstellbarkeit einer Komponente, insbesondere eines Fahrzeugsitzes, auf einem sich längs, vorzugsweise in Fahrzeuglängsrichtung, erstreckenden Einstellbereich, wobei der Einstellbereich einen ersten vorderen Teilbereich und einen zweiten hinteren Teilbereich aufweist sowie einen Fahrzeugsitz.

Allgemein sind Fahrzeugsitze bekannt, beispielsweise aus der Druckschrift US 6,619,741 B, die für einen leichteren Zugang zu den Rücksitzen zusätzlich zu einer Klappbewegung der Rückenlehnen nach vorne auch ein Verschieben des Sitzes nach vorne gestatten. Solche Fahrzeugsitze können mit einer Anschlagvarrichtung versehen werden, welche das Wiederauffinden der Ausgangsposition gestattet, aus der heraus der Sitz nach vorne verschoben worden ist. Hierdurch ist es möglich, dass nach einem durch das Vorklappen des Sitzes erleichterten Einstieg in das Fahrzeug, beispielsweise für Passagiere der Rücksitze, wieder die früher eingestellte Position des Fahrzeugsitzes leicht und unkompliziert eingenommen werden kann. Bei allgemein bekannten Mechanismen dieser Art ist es jedoch nachteilig, dass eine Vielzahl von Teilen zur Realisierung des gewünschten Mechanismus benötigt werden, so dass solche bekannten Verstellmechanismen zum einen in der Produktion aufwendig und teuer sind und zum anderen während der Lebensdauer anfällig für Störungen und sogar sicherheitskritisch sind.

Aufgabe der vorliegenden Erfindung ist es daher, die Nachteile des bekannten Standes der Technik zu vermeiden und eine einfache, leichte, kostengünstig herstellbare, kostengünstig montierbare sowie über ihre Lebensdauer zuverlässige Vorrichtung zur Begrenzung der Einstellbarkeit einer Komponente, insbesondere eines Fahrzeugsitzes, bereitzustellen.

Die Aufgabe wird erfindungsgemäß durch eine Vorrichtung zur Begrenzung der Einstellbarkeit einer Komponente, insbesondere eines Fahrzeugsitzes, auf einem sich längs, vorzugsweise in Fahrzeuglängsrichtung, erstreckenden Einstellbereich gelöst, wobei der Einstellbereich einen ersten vorderen Teilbereich und einen zweiten hinteren Teilbereich aufweist, wobei für den Fall, dass die Komponente in einer von ihrer Normalposition abweichenden Funktionsposition eingestellt ist, die Einstellbarkeit der Komponente auf den ersten Teilbereich beschränkt ist. Hierdurch kann zwar nicht jede ursprünglich durch einen Benutzer eingestellte Einstellposition der Komponente auf dem sich längs erstreckenden Einstellbereich wieder eigenständig aufgefunden werden, es ist jedoch eine Konstruktion der Vorrichtung möglich, die erheblich einfacher und bei gleichem Aufwand auch robuster gestaltet werden kann.

Besonders bevorzugt ist, dass die Komponente ein Sitzteil und eine Rückenlehne aufweist und dass die Rückenlehne in der Funktionsposition gegenüber der Normalposition verschwenkt vorgesehen ist, insbesondere nach vorne verschwenkt vorgesehen ist. Bei Fahrzeugsitzen mit einem Sitzteil und einer Rückenlehne soll häufig nicht nur die Rückenlehne zur Erleichterung des Ein- und Ausstiegs von zu befördernden Personen nach vorne (bzw. allgemein "aus dem Weg") geklappt werden können, sondern es soll darüber hinaus auch noch das Sitzteil längsverschoben werden. Beim Zurückfahren des Sitzteils in die Ausgangslage des Sitzes ist es erfindungsgemäß vorteilhaft möglich, einen Anschlag für die Längsverschiebung des Sitzteils derart zu realisieren, dass das Sitzteil nicht weiter nach hinten verschoben werden kann, bevor nicht die Rückenlehne wieder in ihre Normalposition relativ zum Sitzteil eingestellt wird, der Sitz bzw. die Komponente mithin wieder in seine/ihre Normalposition eingestellt wird.

Besonders vorteilhaft ist, dass die Komponente einen einen Nocken aufweisenden Nockenhebel aufweist und dass die Komponente zum Zusammenwirken mit einer Stoppleiste vorgesehen ist, wobei die Stoppleiste im Bereich des Nockens angeordnet ist, wenn die Komponente in ihrem zweiten Teilbereich eingestellt ist. Hierdurch ist mit einfachen Mitteln eine variable und gleichzeitig robuste Realisierung der erfindungsgemäßen Vorrichtung möglich. Beispielsweise kann die Stoppleiste für unterschiedliche Fahrzeugmodelle unterschiedlich lang gestaltet werden, so dass sehr einfach eine Anpassung an unterschiedliche Fahrzeugtypen realisierbar ist.

Weiterhin ist bevorzugt, dass eine Bewegung des Nockens in den Bereich der Stoppleiste durch die Einstellung der Funktionsposition bewirkbar ist. Es ist damit möglich, die erfindungsgemäße Vorrichtung für einen Benutzer "unsichtbar" zu realisieren, d.h. ein Benutzer erhält die Funktionalität der erfindungsgemäßen Vorrichtung ohne umständlich eine weitere Betätigung vornehmen zu müssen, sondern einfach dadurch, dass beispielsweise die Rückenlehne des zur Seite oder nach vorne zu räumenden Sitzes nach vorne geklappt wird.

Ferner ist bevorzugt, dass die Bewegung des Nockens für den Fall einer Einstellung der Komponente im ersten Teilbereich des Einstellbereichs eine Verschiebung der Komponente in den zweiten Teilbereich des Einstellbereichs verhindert bzw. dass die Bewegung des Nockens für den Fall einer Einstellung der Komponente im zweiten Teilbereich des Einstellbereichs ein Andrücken des Nockens an die Stoppleiste bewirkt. Hierdurch wird auf mechanisch einfache, jedoch sehr robuste und langlebige Weise zum einen eine Begrenzung der Einstellbarkeit der Komponente bzw. des Fahrzeugsitzes ermöglicht und zum anderen eine Fehlbedienung der Vorrichtung verhindert.

Ein weiterer Gegenstand der vorliegenden Erfindung ist ein Fahrzeugsitz mit einer erfindungsgemäßen Vorrichtung. Dieser kann besonders einfach, robust und kostengünstig gestaltet werden und dennoch einen großen Funktionsumfang aufweisen.

Die Erfindung wird nachfolgend anhand von in der Zeichnung dargestellten Ausführungsbeispiele näher erläutert.

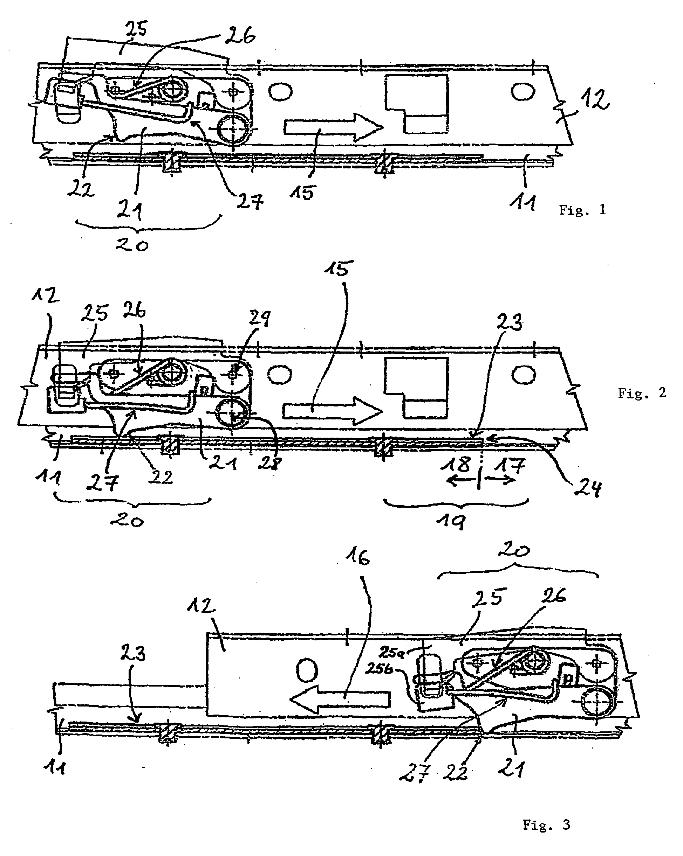

- **Figur 1, 2 und 3**: zeigen Seitenansichten einer erfindungsgemäßen Vorrichtung zur Begrenzung der Einstellbarkeit einer Komponente, insbesondere eines Fahrzeugsitzes, entlang eines Einstellbereichs in verschiedenen Einstellpositionen der Komponente.

Die vorliegende Erfindung betrifft eine Vorrichtung 20 zur Begrenzung der Einstellbarkeit einer Komponente, die insbesondere als Fahrzeugsitz vorgesehen ist.

Nachfolgend wird die Komponente am Beispiel eines Fahrzeugsitzes beschrieben, so dass die Begriffe Komponente und Fahrzeugsitz im Wesentlichen synonym gebraucht werden. Als Beispiel einer solchen erfindungsgemäßen Komponente wird insbesondere ein Fahrzeugsitz mit einer Easy-Entry-Funktion angeführt. Diese Funktion bedeutet, dass eine Verstellung des Fahrzeugsitzes dann möglich ist, wenn der Zugang zu Passagieren beispielsweise zur Rücksitzbank oder aber zu hinter dem Fahrzeugsitz liegenden Sitzgelegenheiten eines Fahrzeugs erleichtert werden soll, beispielsweise für ein zweitüriges Fahrzeug. Zur Erleichterung des Zugangs zu einer hinteren Sitzreihe kann somit der Fahrzeugsitz bzw. der Vordersitz nach dem Vorklappen der Rückenlehne des Vordersitzes in den Sitzschienen so weit nach vorne geschoben werden, dass ein bequemes Einsteigen ermöglicht wird. Beim nachfolgenden Zurückschieben des Sitzes soll dieser bei einer erfindungsgemäßen Vorrichtung an einer definierten Position, die die Grenze zwischen einem ersten Teilbereich 17 eines Einstellbereichs 19 und einem zweiten Teilbereich 18 des Einstellbereichs 19 angibt, angehalten werden, um einem Benutzer zu signalisieren, dass ab dieser Position ein Zurückklappen der Rückenlehne notwendig ist (vgl. **Figur 3**).

In den **Figuren 1 und 2** ist jeweils eine Seitenansicht der erfindungsgemäßen Vorrichtung 20 dargestellt, wobei der (nicht komplett dargestellte) Fahrzeugsitz in seinem zweiten Teilbereich 17 des Einstellbereichs 19 eingestellt ist. In **Figur 3** ist ebenfalls eine Seitenansicht der erfindungsgemäßen Vorrichtung 20 dargestellt; dort jedoch ist der Fahrzeugsitz genau auf die Grenze zwischen dem ersten Teilbereich 17 und dem zweiten Teilbereich 18 eingestellt. Gleiche Bezugszeichen in unterschiedlichen Figuren bezeichnen jeweils gleiche Teile der Vorrichtung 20 bzw. des Fahrzeugsitzes. Auf einer Unterschiene 11 ist eine Oberschiene 12 längsverschieblich, insbesondere in Fahrzeuglängsrichtung, angeordnet. Selbstverständlich kann die Längsverschieblichkeit zwischen Ober- und Unterschiene 11, 12 auch in einer Richtung quer zur Fahrzeuglängsachse vorgesehen sein. In der Regel ist die Oberschiene 12 Teil des Fahrzeugsitzes bzw. der Komponente, die Unterschiene 11 nicht unbedingt. Die Oberschiene 12 trägt eine erfindungsgemäße Vorrichtung 20, die insbesondere einen Nockenhebel 21 mit einem Nocken 22 aufweist. Die Unterschiene 11 ist mit einer Stoppleiste 23 versehen bzw. verbunden, so dass der Nocken 22 mit der Stoppleiste 23 zusammenwirken kann. Die Vorrichtung 20 weist weiterhin einen Betätigungshebel 25 sowie eine erste Feder 26 und eine zweite Feder 27 auf. Erfindungsgemäß ist es insbesondere vorgesehen, dass die erste Feder 26 mit der zweiten Feder 27 einstückig vorgesehen ist, so dass aus einem solchen Bauteil eine zweifache Federwirkung entsprechend der Federn 26, 27 realisierbar ist. Die erste Feder 26 bewirkt ein Anheben des Betätigungshebels 25, d.h. eine Bewegung bzw. eine Kraft, die auf eine Entfernung des Nockens 22 von der Stoppleiste 23 hin wirkt. Die zweite Feder 27 (bzw. der zweite Teil einer einstückig vorgesehenen Feder) bewirkt ein Absenken des Nockenhebels 21, d.h. eine Bewegung bzw. eine Kraft, die auf eine Annäherung des Nockens 22 zur Stoppleiste 23 hin wirkt. Diese Wirkung ergibt sich aus den unterschiedlichen Drehpunkten 29 bzw. 28 von Betätigungshebel 25 bzw. Nockenhebel 21. Der Betätigungshebel 25 weist in einer besonders bevorzugten Ausführungsform ein Hauptteil 25a (vgl. **Figur 3**) und ein beispielsweise mittels einer Steckverbindung mit diesem verbundenes Hilfsteil 25b auf, aus welchem heraus sich die zweite Feder 27 in Richtung etwa parallel zum Nockenhebel 21 erstreckt. Die gesamte erfindungsgemäße Vorrichtung 20 ist bevorzugt im wesentlichen aus Metall hergestellt, wobei jedoch das Hilfsteil 25b bevorzugt aus Kunststoffmaterial hergestellt ist.

Die erfindungsgemäße Vorrichtung 20 funktioniert folgendermaßen: Durch eine Betätigung, d.h. ein Absenken des Betätigungshebels 25 wird die zweite Feder 27 gestaucht (vgl. den Unterschied bei der zweiten Feder 27 zwischen der **Figur 1** und der **Figur 2**) und vermittelt eine den Nocken 22 nach unten drehende Kraft auf den Nockenhebel 21. Befindet sich der Fahrzeugsitz im zweiten Teilbereich 18 des Einstellbereichs 19 (wie in **Figur 2** abgebildet), so drückt der Nocken 22 lediglich auf die Stoppleiste 23 auf; bei einer Verschiebung des Fahrzeugsitzes ergibt sich ein leichtes Schleifen des Nockens auf der Stoppleiste 23. Der Fall dass sich der Fahrzeugsitz im ersten Teilbereich 17 des Einstellbereichs 19 befindet ist in **Figur 3** dargestellt. Auch hier drückt die zweite Feder 27 den Nockenhebel nach unten, jedoch weiter als in Figur 2, weil die Stoppleiste nicht im Weg ist. In diesem Moment ist der Fahrzeugsitz ausschließlich im ersten Teilbereich 17 des Einstellbereichs 19 im wesentlichen frei beweglich, nämlich sowohl nach vorne (Pfeil 15) als auch nach hinten (Pfeil 16). Trifft jedoch der Fahrzeugsitz die Grenze des ersten Teilbereichs 17 zum zweiten Teilbereich 18 des Einstellbereichs 19, so trifft der Nocken 22 auf eine Kante 24 der Stoppleiste 23. Die Stoppleiste 23 (insbesondere mit ihrer Kante 24) und der Nocken 22 bewirken nun, dass sich der Fahrzeugsitz bei einer Zurückbewegung (Pfeil 16) nicht in den zweiten Teilbereich 18 des Einstellbereichs hineinbewegen kann. Es erfolgt hierdurch eine Begrenzung der Einstellbarkeit des Fahrzeugsitzes.

Erfindungsgemäß ist bevorzugt, dass die Betätigung des Betätigungshebels 25 mittels Aktuatoren, beispielsweise Bowdenzügen, mit der Bewegung bzw. Positionsänderung der Rückenlehne des Fahrzeugsitzes relativ zum Sitzteil bewirkt wird. Hierzu ist der Betätigungshebel 25 mit entsprechenden, in den Figuren jedoch nicht dargestellten Mitteln mit der Rückenlehne bzw. ihrem (nicht dargestellten) Schwenkmechanismus verbunden.

Es ist klar, dass der eben beschriebene Betätigungszusammenhang zwischen der Einstellung der Rückenlehne des Fahrzeugsitzes und der erfindungsgemäßen Vorrichtung natürlich dann aufgehoben ist, wenn die Rückenlehne wieder in ihre Normalposition relativ zum Sitzteil eingestellt ist, der Fahrzeugsitz sich mithin wieder in seiner Normalposition befindet (unabhängig davon, ob sich der Fahrzeugsitz in seinem ersten Teilbereich 17 oder in seinem zweiten Teilbereich 18 eingestellt ist). In diesem Fall hört die Betätigung des Betätigungshebels 25 auf und der Betätigungshebel 25 wird zusammen mit dem Nockenhebel 21 nach oben bewegt, so dass sich der Fahrzeugsitz völlig unabhängig von dem Ort des Übergangs zwischen dem ersten Teilbereich 17 und dem zweiten Teilbereich 18, d.h. dem Ort der Kante 24, beispielsweise zurückbewegen kann.

### Bezugszeichenliste

- 11: Unterschiene
- 12: Oberschiene
- 15, 16: Pfeile
- 17: erster Teilbereich
- 18: zweiter Teilbereich
- 19: Einstellbereich
- 20: Vorrichtung
- 21: Nockenhebel
- 22: Nocken
- 23: Stoppleiste
- 24: Kante der Stoppleiste
- 25: Betätigungshebel
- 25a: Hauptteil des Betätigungshebels
- 25b: Hilfsteil des Betätigungshebels
- 26: erste Feder
- 27: zweite Feder
- 28: Drehpunkt des Nockenhebel
- 29: Drehpunkt des Betätigungshebels

## Patentansprüche

1. Vorrichtung (20) zur Begrenzung der Einstellbarkeit einer Komponente, insbesondere eines Fahrzeugsitzes, auf einem sich längs, vorzugsweise in Fahrzeuglängsrichtung, erstreckenden Einstellbereich (19), wobei der Einstellbereich (19) einen ersten vorderen Teilbereich (17) und einen zweiten hinteren Teilbereich (18) aufweist, wobei für den Fall, dass die Komponente in einer von ihrer Normalposition abweichenden Funktionsposition eingestellt ist, die Einstellbarkeit der Komponente auf den ersten Teilbereich (17) beschränkt ist, wobei die Komponente ein Sitzteil und eine Rückenlehne aufweist, wobei die Rückenlehne in der Funktionsposition gegenüber der Normalposition verschwenkt vorgesehen ist, insbesondere nach vorne verschwenkt vorgesehen ist, **dadurch gekennzeichnet, dass** die Komponente einen einen Nocken (22) aufweisenden Nockenhebel (21) aufweist, wobei die Komponente zum Zusammenwirken mit einer Stoppleiste (23) vorgesehen ist, wobei die Stoppleiste (23) im Bereich des Nockens (22) angeordnet ist, wenn die Komponente in ihrem zweiten Teilbereich (18) eingestellt ist, und wobei die Bewegung des Nockens (22) für den Fall einer Einstellung der Komponente im zweiten Teilbereich (18) des Einstellbereichs (19) ein Andrücken des Nockens (22) an die Stoppleiste (23) bewirkt.

2. Vorrichtung (20) nach Anspruch 1, **dadurch gekennzeichnet, dass** eine Bewegung des Nockens (22) in den Bereich der Stoppleiste (23) durch die Einstellung der Funktionsposition bewirkbar ist.

3. Vorrichtung (20) nach einem der vorhergehenden Ansprüche, **dadurch gekennzeichnet, dass** die Bewegung des Nockens (22) für den Fall einer Einstellung der Komponente im ersten Teilbereich (17) des Einstellbereichs (19) eine Verschiebung der Komponente in den zweiten Teilbereich (18) des Einstellbereichs (19) verhindert.

4. Vorrichtung (20) nach einem der vorhergehenden Ansprüche, **dadurch gekennzeichnet, dass** zum Andrücken des Nockens (22) an die Stoppleiste (23) eine Feder (27) vorgesehen ist.

5. Fahrzeugsitz mit einer Vorrichtung (20) nach einem der vorhergehenden Ansprüche.

## Claims

1. Device (20) for limiting the adjustability of a component, in particular a vehicle seat, to a longitudinally-running adjustment range (19), preferably in the vehicle longitudinal direction, the adjustment range (19) having a first front partial range (17) and a second rear partial range (18), wherein, should said component be adjusted to a functional position different from the normal position thereof, the adjustability of the component is limited to the first partial range (17), wherein the component has a seat part and a backrest, wherein in the functional position the backrest is provided swiveled relative to the normal position, in particular is provided swiveled toward the front,
**characterized in that** the component has a cam lever (21) comprising a cam (22), wherein the component is provided for cooperating with a stop strip (23), the stop strip (23) being arranged in the region of the cam (22) when the component is adjusted in its second partial range (18), and wherein, should the component be adjusted in the second partial range (18) of the adjustment range (19), the movement of the cam (22) causes the cam (22) to press against the stop strip (23)

2. Device (20) according to Claim 1, **characterized in that** a movement of the cam (22) into the region of the stop strip (23) may be effected by the adjustment of the functional position.

3. Device (20) as claimed in one of the preceding claims, **characterized in that,** should the component be adjusted in the first partial range (17) of the adjustment range (19), the movement of the cam (22) prevents a displacement of the component into the second partial range (18) of the adjustment range (19).

4. Device (20) as claimed in one of the preceding claims, **characterized in that** a spring (27) is provided for pressing the cam (22) against the stop strip (23).

5. Vehicle seat with a device (20) as claimed in one of the preceding claims.

## Revendications

1. Dispositif (20) pour limiter la possibilité de réglage d'un composant, en particulier d'un siège de véhicule, sur une plage d'ajustement (19) s'étendant en longueur, de préférence dans la direction longitudinale du véhicule, la plage d'ajustement (19) présentant une première région partielle avant (17) et une deuxième région partielle arrière (18), et dans le cas où le composant est ajusté dans une position fonctionnelle s'écartant de sa position normale, la possibilité d'ajustement du composant sur la première région partielle (17) étant limitée, le composant présentant une partie de siège et un dossier, le dossier étant prévu en position pivotée par rapport à la position normale dans la position fonctionnelle, en particulier étant prévu dans une position pivotée vers l'avant,
**caractérisé en ce que**
le composant présente un levier de came (21) présentant une came (22), le composant étant prévu pour coopérer avec une nervure d'arrêt (23), la nervure d'arrêt (23) étant disposée dans la région de la came (22), lorsque le composant est ajusté dans sa deuxième région partielle (18), et le mouvement de la came (22) dans le cas d'un ajustement du composant dans la deuxième région partielle (18) de la plage d'ajustement (19) provoquant une pression de la came (22) contre la nervure d'arrêt (23).

2. Dispositif (20) selon la revendication 1, **caractérisé en ce qu'**un mouvement de la came (22) dans la région de la nervure d'arrêt (23) peut être provoqué par l'ajustement de la position fonctionnelle.

3. Dispositif (20) selon l'une quelconque des revendications précédentes, **caractérisé en ce que** le mouvement de la came (22) dans le cas d'un ajustement du composant dans la première région partielle (17) de la plage d'ajustement (19) empêche un déplacement du composant dans la deuxième région partielle (18) de la plage d'ajustement (19).

4. Dispositif (20) selon l'une quelconque des revendications précédentes, **caractérisé en ce que** pour presser la came (22) contre la nervure d'arrêt (23), on prévoit un ressort (27).

5. Siège de véhicule comprenant un dispositif (20) selon l'une quelconque des revendications précédentes.
